Europäisches Patentamt

European Patent Office

Office européen des brevets

(11) Publication number: **0 180 454**
A2

# EUROPEAN PATENT APPLICATION

(21) Application number: 85307812.9

(22) Date of filing: 29.10.85

(51) Int. Cl.⁴: **A 22 B 5/20**, A 22 B 7/00

(30) Priority: 31.10.84 DK 5177/84

(43) Date of publication of application: 07.05.86
Bulletin 86/19

(84) Designated Contracting States: **DE FR GB NL SE**

(71) Applicant: **Slagteriernes Forskningsinstitut, Maglegaardsvej 2, DK-4000 Roskilde (DK)**

(72) Inventor: **Laursen, Arne, Svaleovej 60 Veddelev, DK-4000 Roskilde (DK)**

(74) Representative: **Alexander, Thomas Bruce et al, Boult, Wade & Tennant 27 Furnival Street, London EC4A 1PQ (GB)**

(54) Apparatus for automatically fixing a carcass.

(57) An apparatus for automatic fixing a vertically suspended carcass, comprising a carriage (3) moved vertically by a cylinder (5), the carriage is equipped with two plates set at an angle to form a funnel-like guiding device (10) for catching and guiding the snout of the carcass. The carriage is furthermore provided with another cylinder (6) for horizontal movement of a fixing tool — formed as a hook (7) into and out of the guiding device (10).

The carcass may be fixed as follows: the carriage (3) with the guiding device (10) is moved upwards towards the snout of the carcass, whereby the snout is caught by the guiding device. When the snout arrives at the bottom of the guiding device the upwards movement of the carriage (8) is stopped. The hook (7) is then moved into engagement with the lower jaw in order to stretch, center and fix the carcass during a successive splitting operation.

As a result the hook (7) is placed with a high degree of accuracy in the lower jaw and the carcass is stretched, centered and fixed correctly for the splitting operation, even if the shape and length of carcass deviate considerably from those of a standard carcass.

\

## Apparatus for automatic fixing a carcass

The present invention relates to an apparatus for automatic fixing a vertically suspended carcass.

In the mechanical treatment of carcasses in modern bacon factories it is often necessary to fix the carcass in a uniform and reliable way before it is treated. Thus, in the automatic splitting of pigs it is important that the carcass is placed correctly in the splitting machine and furthermore kept centred and fixed during the splitting operation, as an incorrectly performed splitting will substantially reduce the value of the split carcass.

A number of different devices has been designed in order to obtain a sufficiently uniform and reliable fixing of the carcass in splitting machines. However, the fixing and positioning obtained by the automatic application of such known fixing devices involves still a high degree of inaccuracy due to the individual shapes and sizes of carcasses. As a result the slaughterhouse has to accept that some carcasses are incorrectly split, or otherwise it must use an operator who only acts when the fixing tool fails or is placed incorrectly.

In DK B 139.373 is described a splitting machine having centering and fixing means for a carcass suspended in its hind legs in a gambrel. For stretching and centering of the carcass there is provided a hook device pivotably mounted on a horizontal shaft. This hook device engages with the lower jaw of a carcass through a slit which was cut in connection with a preceding evisceration operation. It happens frequently that the hook does not engage with the carcass at all, or it engages with a wrong part of the carcass, which may be due to the fact that the carcass is swinging for a while after the introduction into the machine, or that the machine is not designed to cope with the length variation of the carcass, which variation may amount to 50 cm. The result is that the splitting becomes unsatisfactory.

...

The object of the present invention is to provide an apparatus for centering and fixing a carcass, in which the centering and fixing means automatically engage with the carcass in a reliable and correct manner.

According to the invention there is provided an apparatus comprising a vertically sliding carriage with a funnel-like device for guiding the snout of the carcass and a fixing tool sliding horizontally on the said carriage moving into and out of the said device.

The fixing tool may comprise a hook for engagement with the lower jaw of the carcass. The hook may for instance comprise a rod bended in an obtuse angle, the end portion of said rod preferably being blunt.

By means of the apparatus of the invention carcasses may be split in the middle of the backbone, even when they due to a high slaughtering rate (10-20 seconds between each carcass) have to be introduced so quickly in the splitting machine that they will inevitably be swinging. The guiding device will catch the snout of the swinging carcass during the upward movement of the carriage, and in the lower part of the guiding device the snout will then trigger a switch, causing a horizontal displacement of the fixing tool into the guiding device. As the head of the carcass is in a well-defined position in relation to the fixing tool's line of travel, the tool is applied with a high degree of accuracy.

Thus, a hook for fixing the lower jaw will with a high degree of accuracy pass through the above mentioned slit and then rest on the hard and relatively smooth palate, so that during the downward movement of the carriage, the hook easily will slide down to correct engagement with the lower jaw of the carcass. As a result the carcass is stretched and thereby centered and fixed in a reliable manner.

From the explanation it will be seen that the funnel-like guiding device does not necessarily need to have the shape of a reversed truncated cone or pyramid in order to be able to guide the head correctly in relation to the fixing tool's line of travel.

...

The guiding device may for instance comprise two flat plates arranged like a V in relation to each other, their line of intersection being parallel to the tool's line of travel. In this embodiment there is no funnel edge crossing the tool's line of travel on which the snout or mouth region may inadvertently rest on.

The lower part of the guiding device is preferably open as this facilitates the necessary cleaning between each cycle of operation.

The apparatus may comprise a pneumatic, hydraulic or electric cylinder for vertically moving the carriage with the guiding device and the fixing tool, and another pneumatic, hydraulic or electric cylinder mounted on the carriage for horizontally moving the fixing tool into and out of the guiding device. Such cylinders provide a simple, mechanical construction of the apparatus and the different automatic operations will be easy to perform. In addition, their piston rods may provide a predetermined, constant force.

In the following a more detailed description of the invention reference will be made to the accompanying drawings, in which

Figure 1 is a preferred embodiment of an apparatus for automatic fixing of the jaw of a pig in a splitting machine, the hook supporting carriage being in a lower position, and

Figure 2 is a side view of the same apparatus, the carriage being in an upper position determined by the level of the pig's snout wherein the hook is projecting into the pig's lower jaw, so that it rests on its palate.

The apparatus comprises a base 1 having two guide bars 2 placed at a distance from each other with only the nearest one shown in the Figures. A carriage 3 guided by bushings 4 may be moved up and down the guide bars by means of a pneumatic cylinder 5 having a piston rod resting on the base 1.

...

Mounted horizontally on the carriage is a pneumatic cylinder 6 having a piston rod, the free end of which is provided with a hook 7 designed for engagement with the lower jaw of the carcass. A lever 9 is pivotably connected to the carriage by a bracket 8. In the free end of the lever 9 is a funnel-like guiding device 10 for guiding the snout of the carcass. It consists of two flat plates which are arranged like a V in relation to each other with a line of intersection parallel to the hook's line of travel. The plates do not, however, intersect at the bottom of the V, but have a minimum distance from each other corresponding to half the width of the pig's snout.

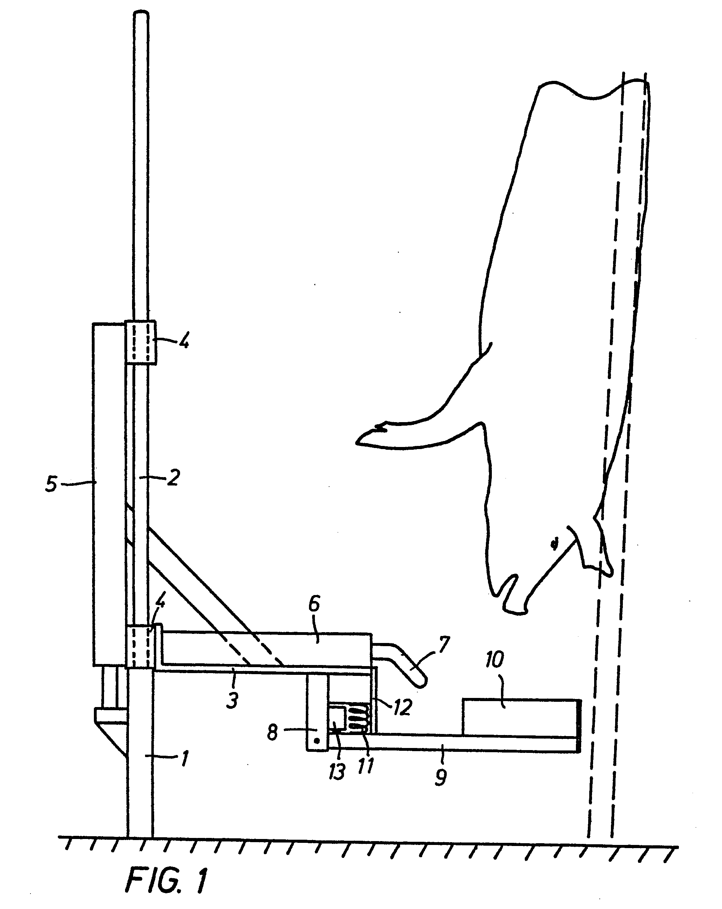

The lever 9 is held in a horizontal postion by means of a spring 11 pulling it up to the position shown in Figure 1, where the lever is resting on the lower edge of a plate 12. The bracket 8 is provided with a switch device 13 with a sensor registering the angular position of the lever.

The function of the apparatus is as follows:

A carcass suspended on a gambrel is introduced into the splitting machine equipped with the described fixing apparatus of the invention. The carcass is brought to a stop, the hind legs are locked into position, and a non-shown support member is automatically introduced in the carcass to rest on the backbone. At the same time the vertical cylinder 5 in the apparatus of the invention is activated, whereby the carriage moves upwards along the guide bars 2 from the position shown in Figure 1.

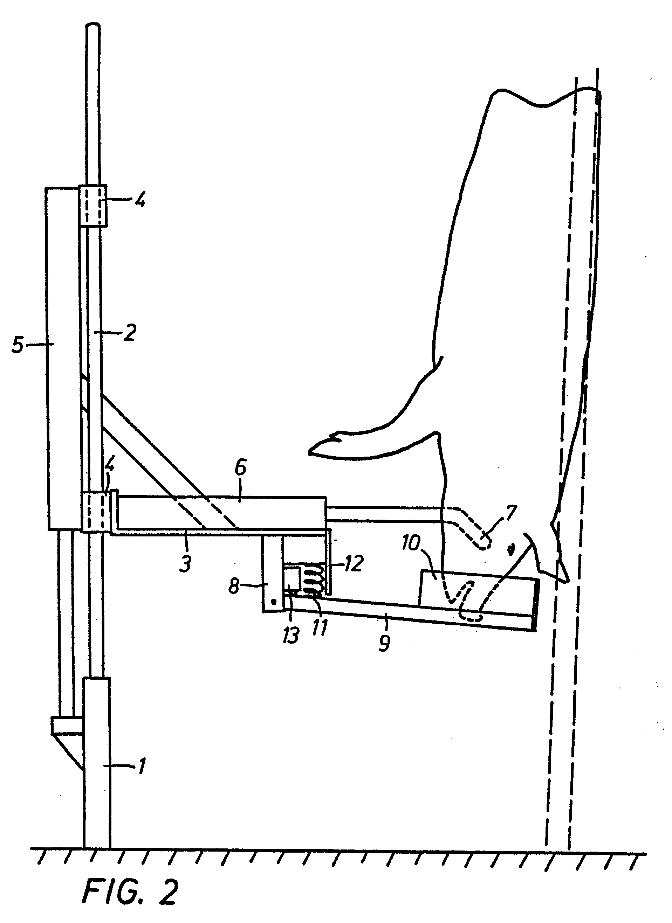

During this movement the guiding device 10 will catch the snout of the carcass and by the continued movement of the carriage, the snout is then guided into the lower part of the device. The snout will now counteract the continued movement of the guiding device, and as the carriage continues its movement upwards, the lever 9 with the guiding device 10 will be forced back in relation to the carriage, until the lever is in the angular position shown in Figure 2.

...

In this position the switch device 13 sends a stop impulse to the vertical cylinder 5. At the same time the horizontal cylinder 6 is automatically activated where the hook 7 on the piston rod is pushed horizontally through a slit which was cut in the carcass during the evisceration operation. The hook will then rest on the palate with its blunt end, pushing the carcass against supporting rods of the splitting machine indicated by dot-and-dash lines, see Figure 2.

For the purpose of stretching, centering and fixing the carcass, the vertical cylinder 5 is then reversed so that the carriage is moved downwards along the guide rods 2. The hook 7 will then easily slide down into the "V" formed by the lower jaw bone where it will pull with a force determined by the adjustable air pressure in the vertical cylinder 5. The carcass is stretched and thereby centered and fixed and is then ready to be split by means of the splitting machine in a known way. If desired, the saw may be stopped upon splitting the backbone and then be withdrawn to avoid sawing into the head of the carcass. The fixing obtained by means of the apparatus of the invention will ensure a correct automatic splitting of the carcass.

The apparatus is reversed to start position in the following way:

The carriage is moved upwards by means of the vertical cylinder 5, until the snout contacts the guiding device 10 and the lever 9, thereby releasing an impulse from the switch device 13 which stops the further movement of the cylinder. The hook 7 is then pulled out of the carcass by means of the horizontal cylinder 6, and the carriage is moved down to the start position shown in Figure 1 by reactivation of the vertical cylinder 5. The apparatus is then ready for another working cycle.

In splitting of carcasses a working cycle will comprise the steps of: introduction of the carcass, stretching, centering and fixing, splitting, unfixing and continued conveyance of the split carcass. This working cycle does normally not last more than approx. 15 seconds altogether. Accordingly, it is very important that the fixing cycle is performed extremely fast. Furthermore, this cycle should be very reliable to avoid any disturbance on the slaughterline.

The fixing tool may also be fitted with other processing tools having their own working cycles.                         ...

Claims

1. An apparatus for automatic fixing a vertically suspended carcass, c h a r c a c t e r i z e d in that it comprises a vertically sliding carriage (3) with a funnel-like guiding device (10) for guiding the snout of the carcass, and a fixing tool (7) sliding horizontally on the said carriage moving into and out of the guiding device.

2. An apparatus as claimed in claim 1, c h a r a c t e r i z e d in that said fixing tool (7) comprises a hook for engagement with the lower jaw of the carcass.

3. An apparatus as claimed in claim 2, c h a r a c t e r i z e d in that the hook comprises a rod bended in an obtuse angle, the end portion of said rod preferably being blunt.

4. An apparatus as claimed in any one of the preceding claims, c h a r a c- t e r i z e d in that the guiding device (10) comprises two flat plates arranged like a V in relation to each other, their line of intersection being parallel to the tool's line of travel.

5. An apparatus as claimed in any one of the preceding claims, c h a r a c- t e r i z e d in that the lower part of the guiding device (10) is open.

6. An apparatus as claimed in claims 1, 2 or 3, c h a r a c t e r i z e d in that it comprises a pneumatic, hydraulic or electric cylinder for vertically moving the carriage (3) with the guiding device (10) and the fixing tool (7), and another pneumatic, hydraulic or electric cylinder mounted on the carriage for horizontally moving the fixing tool into and out of the guiding device.

...

FIG. 1

FIG. 2